# EUROPÄISCHE PATENTSCHRIFT

(11) **EP 4 321 774 B1**
(45) Veröffentlichungstag und Bekanntmachung des Hinweises auf die Patenterteilung: **18.02.2026**
(21) Anmeldenummer: 23190155.4
(22) Anmeldetag: 08.08.2023
(51) Int. Cl.: F16H 48/34

(54) **ZUSTELLERWAGEN**
ADJUSTER TROLLEY
CHARIOT D'ALIMENTATION

(30) Priorität: 08.08.2022 AT 506012022
(43) Veröffentlichungstag der Anmeldung: 14.02.2024
(73) Patentinhaber: ÖSTERREICHISCHE POST AG, 1030 Wien (AT)
(72) Erfinder: PERNER, Wolfgang E., 4810 Gmunden (AT)
(74) Vertreter: SONN Patentanwälte GmbH & Co KG

(56) Entgegenhaltungen:
- JP-A- 2018 110 663
- JP-B2- 4 884 394
- US-A1- 2021 039 697

## Beschreibung

Die Erfindung betrifft einen Zustellerwagen, insbesondere Post-Zustellerwagen, aufweisend:
ein Fahrgestell, an welchem zumindest zwei Antriebsräder, vorzugsweise zwei Hinterräder, angeordnet sind,
einen Antriebsmotor zum Antreiben von Antriebsachsen der Antriebsräder,
ein Differenzial zum Ausgleich von Drehzahlunterschieden zwischen den Antriebsrädern,
einen vom Fahrgestell getragenen Aufbau zur Aufnahme von Transportgut, insbesondere von Poststücken.

Ein solcher Wagen ist aus JP 4 884394 B2 bzw. JP 2018 110663 A bekannt. Die US 2021/039697 A1 zeigt einen Wagen mit einer Totmannbremse.

Aus der EP 0 711 698 A2 ist ein solcher Zusteller- bzw. Verteilerwagen bekannt, mit welchem die Zustellung einer großen Menge an Poststücken bei geringer körperlicher Belastung der Zustellperson bewerkstelligt werden soll. Am Chassis des Zustellerwagens sind vordere Lenkrollen und hintere Bockrollen angeordnet. Je nach Ausführung kann jeder der Rollen ein Einzelantrieb zugeordnet werden, wobei insbesondere den hinteren Bockrollen jeweils mit einem Radnabenmotor ausgerüstet sein können. Das ist jedoch nachteilig, weil der regelungstechnische Aufwand deutlich steigt. Zusätzlich erhöht sich der benötigte Platz, was bei einem kompakten Zustellerwagen mit benötigter Bodenfreiheit oftmals nicht realisierbar ist. In einer anderen Ausführungsform weist der bekannte Zustellerwagen einen gemeinsamen Antriebsmotor für die beiden hinteren Bockrollen auf. Dieser gemeinsame Antriebsmotor ist über ein Differential mit jeder der Bockrollen verbunden. Im Betrieb solcher Zustellerwagen müssen stufenartige Fahrbahnversetzungen wie Bordsteinkanten überwunden werden. Aus diesem Grund weist der bekannte Zustellerwagen einen zur Fahrebene schräg gestellten Stollenriemen auf, der aktiv oder passiv über zwei Umlenkrollen geführt wird.

In der Praxis hat sich jedoch gezeigt, dass die Überwindung von Fahrbahnabsätzen wie Bordsteinkanten trotz des schräg gestellten Stollenriemens schwierig ist. Wenn der Zusteller die Bordsteinkante schräg anfährt, kann es passieren, dass eines der Hinterräder den Bodenkontakt verliert. Sind die Hinterräder über ein Differential mit dem Antriebsmotor verbunden, dreht das vom Boden abgehobene Hinterrad durch, womit der Vortrieb nicht mehr gewährleistet ist. Selbst wenn der Stollenriemen angetrieben ist, kann die Bordsteinkante ohne den Vorschub der Hinterräder nicht überwunden werden. Der Zusteller muss dann den Wagen händisch über die Bordsteinkante schieben. Das kann jedoch aufgrund des hohen Gewichts des Zustellerwagens, insbesondere bei einer hohen Zuladung mit Poststücken, kräfteraubend oder gar unmöglich sein.

DE 10 2020 004 198 A1 offenbart einen Wagen, welcher mit einer Fahrgestelleinheit gebildet wird. Auf der Fahrgestelleinheit können verschiedene Behältereinheiten zur Aufnahme von Gegenständen angeordnet werden. Des Weiteren ist an dieser Fahrgestelleinheit eine Hinterradeinheit, eine Vorderradeinheit und zwei Haltegriffe angeordnet. Die Vorderradeinheit dient als Antriebseinheit mit zwei Antriebsrädern. Ein Motor treibt die Antriebsräder über eine Motorwelle an. Ein Differential ermöglicht einen Drehzahlunterschied zwischen linker und rechter Antriebswelle. Eine Differentialsperre ermöglicht eine Sperrung des Differentials. Die Differentialsperre unterstützt jedoch lediglich eine Totmannbremse, um einer benutzenden Person zu erlauben, sich von dem Wagen zu entfernen, ohne dass dieser davonrollt. Eine Überwindung von Hindernissen wird aufgrund der Ausführung der Differentialsperre nicht erleichtert, sondern erschwert, da, sobald die Totmannbremse bei aufrechter Differentialsperre greift, der Wagen gebremst wird.

Demgegenüber besteht die Aufgabe der vorliegenden Erfindung darin, zumindest einzelne Nachteile des Standes der Technik zu lindern bzw. zu beheben. Ziel der vorliegenden Erfindung ist es insbesondere, einen Zustellerwagen zu schaffen, mit welchem das Überwinden von Fahrbahnabsätzen wie Bordsteinkanten ohne besonderen Kraftaufwand des Zustellers selbst bei unpräzisem Anfahren des Fahrbahnabsatzes ermöglicht wird.

Diese Aufgabe wird durch einen Zustellerwagen nach Anspruch 1 gelöst. Bevorzugte Ausführungsformen sind in den abhängigen Ansprüchen angegeben.

Somit ist eine Differenzialsperre zur Sperrung des Differenzials für die Antriebsräder vorgesehen, so dass bei aktivierter Differenzialsperre ein gleichzeitiges Antreiben der Antriebsräder bei gleichem Drehmoment beim Überwinden eines Fahrbahnabsatzes ermöglicht wird.

Bei aktivierter Differenzialsperre wird ein gleichzeitiges Antreiben der Antriebsräder, insbesondere der Hinterräder, bei gleichem Drehmoment ermöglicht. Fährt der Zusteller mit dem Zustellwagen schräg, d.h. nicht im rechten Winkel, auf den Fahrbahnabsatz, insbesondere eine Bordsteinkante auf, und verliert eines der Antriebsräder in Folge den Bodenkontakt, kann bei aktivierter Differenzialsperre das Hindernis dennoch zuverlässig überwunden werden. Vorteilhafterweise kann somit der Zustellwagen selbst bei einem ungenauen Anfahren des Fahrbahnabsatzes zuverlässig überwunden werden, ohne besondere Kraftanstrengungen vom Zusteller vorauszusetzen.

Für die Zwecke dieser Offenbarung beziehen sich die Orts- und Richtungsangaben, wie "oben", "unten", "horizontal", "vertikal", "seitlich" etc., auf den bestimmungsgemäßen Gebrauch des Zustellwagens auf einem horizontalen Untergrund bei Geradeaus-Vorwärtsfahrt.

Die Differenzialsperre weist ein Brückenelement, insbesondere eine Brückenwelle, zur Kopplung der Antriebsachsen der Antriebsräder auf. Bevorzugt ist die Brückenwelle als Einzelkomponente, ohne gegeneinander bewegliche Teile, ausgeführt.

Um die Bodenfreiheit des Zustellerwagens nicht einzuschränken, ist das Brückenelement oberhalb der Antriebsachsen der Antriebsräder angeordnet.

Die Antriebsachsen der Antriebsräder sind jeweils über eine Kupplungseinheit mit dem Brückenelement koppelbar, wobei die Antriebsachsen der Antriebsräder in eingekoppelten Zuständen der Kupplungseinheiten über das Brückenelement miteinander gekoppelt und in ausgekoppelten Zuständen der Kupplungseinheiten voneinander entkoppelt sind. Im eingekoppelten Zustand ist die Differenzialsperre aktiv, so dass die Antriebsräder die gleiche Drehzahl bei gleichem Drehmoment aufweisen. Im ausgekoppelten Zustand ist die Differenzialsperre inaktiv, so dass Drehzahlunterschiede zwischen den Antriebsrädern, insbesondere für eine Kurvenfahrt, ermöglicht werden kann.

Bei einer bevorzugten Ausführung ist in den ausgekoppelten Zuständen der Kupplungseinheiten das Brückenelement, vorzugsweise zudem die Kupplungseinheiten, gegenüber den Drehungen der Antriebsachsen der Antriebsräder stillstehend angeordnet. Dadurch kann der Energieaufwand im laufenden Betrieb, insbesondere bei deaktivierter Differenzialsperre, wesentlich gesenkt werden. Vorteilhafterweise kann so die Betriebsdauer verlängert werden, bevor ein Energiespeicher, vorzugsweise ein Akku, aufgeladen werden muss.

Vorzugsweise weisen die Kupplungseinheiten erste Kupplungselemente, welche in den eingekoppelten Zuständen mit den Antriebsachsen gekoppelt sind, und zweite Kupplungselemente, welche jeweils mit dem Brückenelement gekoppelt sind, auf, wobei die ersten Kupplungselemente über Kraftübertragungselemente, vorzugsweise über Endloselemente, insbesondere über Ketten, mit den zweiten Kupplungselementen verbunden sind. Alternativ zu den Ketten können Riemenverbindungen vorgesehen sein. Weiters können Zahnradverbindungen mit beliebigen Übersetzungsverhältnissen zur Verbindung der ersten Kupplungselemente mit den zweiten Kupplungselementen vorgesehen sein.

Um das Drehmoment und die Drehzahl von den Antriebsachsen auf die ersten Kupplungselemente zu übertragen, sind mit den Antriebsachsen gekoppelte, d.h. mitrotierende, Kopplungselemente vorgesehen, welche in den eingekoppelten Zuständen mit den ersten Kupplungselementen der Kupplungseinheiten gekoppelt, d.h. mitrotierend angeordnet, sind.

In einer bevorzugten Ausführung weisen die ersten Kupplungselemente jeweils eine erste Verzahnung auf und die Kopplungselemente weisen jeweils eine zweite Verzahnung auf, wobei die zweiten Verzahnungen der Kopplungselemente in den eingekoppelten Zuständen mit den ersten Verzahnungen der ersten Kupplungselemente in Eingriff stehen. Über die Zahnverbindung werden Drehmoment und Drehzahl übertragen.

Gemäß einer bevorzugten Ausführung sind die ersten Zähne der ersten Verzahnung in Umfangsrichtung (bezogen auf die Antriebsachse) kürzer ausgeführt als die Lücken zwischen den zweiten Zähnen der zweiten Verzahnung. Dadurch wird der Kopplungsvorgang für die Aktivierung der Differenzialsperre erleichtert, da die Verzahnungen der ersten Kupplungselemente mehr Spiel haben, in die Zahnlücken der zweiten Verzahnungen der Kopplungselemente einzugreifen.

Um den Kopplungsvorgang einzuleiten, ist bei einer bevorzugen Ausführung eine Betätigungseinrichtung zum Bewegen eines der ersten Kupplungselemente vom ausgekoppelten in den eingekoppelten Zustand vorgesehen. Mit Hilfe der Betätigungseinrichtung wird bevorzugt eine Kraft in Richtung parallel zu Antriebsachse eingeleitet, um zumindest eine der Kupplungseinheiten in den eingekoppelten Zustand zu bringen.

Bei einer bevorzugten Ausführung weist die Betätigungseinrichtung einen Motor, insbesondere einen Schrittmotor, auf. Im eingeschalteten Zustand des Motors übt die Betätigungseinrichtung eine solche Kraft auf die zugehörige Kupplungseinheit aus, dass das erste Kupplungselement in den eingekoppelten Zustand überführt wird.

Bevorzugt weist die Betätigungseinrichtung ein mittels des Motors bewegliches Betätigungsteil und ein mit dem ersten Kupplungselement verbundenes Verbindungsteil auf. Der Motor kann die Antriebskraft bei einer bevorzugten Ausführung mittels einer Spindel auf das bewegliche Betätigungsteil übertragen, so dass das Verbindungsteil das erste Kupplungselement in den eingekoppelten Zustand bewegt.

Das Betätigungsteil und das Verbindungsteil sind bevorzugt um eine gemeinsame Schwenkachse, welche vorzugsweise horizontal und normal auf die Antriebsachse verläuft, insbesondere unabhängig voneinander verschwenkbar.

Vorzugsweise ist das Verbindungsteil eine Gabel mit zwei Gabelschenkeln. An den freien Enden der Gabelschenkel sind bevorzugt Führungszapfen vorgesehen, welche in einer Aufnahmenut des ersten Kupplungselements angeordnet sind. Diese Ausführung ermöglicht eine kompakte Bauweise, ohne dabei die Antriebsachsen oder umliegende Bauteile einzuschränken.

In einer bevorzugten Ausführung weist die Betätigungseinrichtung ein Federelement auf, welches das Verbindungsteil im betätigten Zustand des Betätigungsteils in Richtung des eingekoppelten Zustands des ersten Kupplungselements mit dem Kopplungselement vorspannt. Durch das Vorspannen des Federelementes wird gewährleistet, dass die zweite Verzahnung des Kopplungselements in eine der Zahnlücken der ersten Verzahnung des ersten Kupplungselements gerät. Wenn beim Kopplungsvorgang die ersten Zähne des ersten Kupplungselements gegen die zweiten Zähne des Kopplungselements stoßen, können das erste Kupplungselement und das Kopplungselement nicht miteinander in Eingriff gebracht werden. Da sich jedoch die zweiten Zähne des Kopplungselements durch den Antriebsmotor weiterdrehen, drückt das Federelement die ersten Zähne des ersten Kupplungselements in die Zahnlücken zwischen den zweiten Zähnen des Kopplungselements, sobald das Kopplungselement mit der Antriebsachse weiter gedreht wurde.

Vorzugsweise ist das Federelement als ein Federband ausgeführt. Dadurch wird eine besonders platzsparende Ausführung erzielt, welche bei dem begrenzten Einbauraum des Zustellerwagens günstig ist.

Bevorzugt ist das Verbindungsteil im unbelasteten Zustand des Verbindungsteils an einem Anschlag, insbesondere an einer Anschlagnase, des Betätigungsteils angeschlagen, wobei die Betätigungseinrichtung ohne Wirkung des Federelements vom eingekoppelten in den ausgekoppelten Zustand beweglich ist. Somit muss das Federelement nur beim Einkoppeln belastet werden, wenn die Federwirkung des Federelements dafür benötigt wird, den Eingriff des ersten Kupplungselements mit dem Kopplungselement auch dann sicherzustellen, wenn die erste Verzahnung des ersten Kupplungselements zunächst auf die zweite Verzahnung des Kopplungselements trifft, bevor das Kopplungselement durch den Antriebsmotor weitergedreht und so die Verbindung mit dem ersten Kupplungselement ermöglicht wird. Vorteilhafterweise ist das Federelement bei dieser Ausführung einer deutlich geringeren Materialermüdung ausgesetzt, da eine abwechselnde Zug-/Druckbelastung vermieden werden kann.

Bei einer bevorzugten Ausführungsform weist der Aufbau zumindest eine Seitenwand, vorzugsweise zwei gegenüberliegende Seitenwände, auf, welche zwischen einer eine seitliche Zugangsöffnung verschließenden Schließstellung und einer die seitliche Zugangsöffnung freigebenden Offenstellung beweglich ist. Bevorzugt weist der Aufbau weiters zumindest einen Deckel auf, welcher zwischen einem eine oberseitige Beladeöffnung verschließenden geschlossenen Zustand und einem die oberseitige Beladeöffnung freigebenden geöffneten Zustand beweglich ist.

Bei einer bevorzugten Ausführungsform weist der Zustellerwagen vorne eine Einrichtung zur Überwindung eines Fahrbahnabsatzes auf, welcher insbesondere eine von der Fahrbahn hochstehende Bordsteinkante ist. Die Einrichtung weist bevorzugt einen Raupenantrieb zur Überwindung des Fahrbahnabsatzes auf. Der Raupenantrieb ist bevorzugt im Wesentlichen mittig zwischen zwei Vorderrädern angeordnet.

Die Erfindung wird nachstehend anhand eines in den Zeichnungen dargestellten Ausführungsbeispiels weiter erläutert.
Fig. 1 zeigt einen erfindungsgemäßen Post-Zustellerwagen von vorne.
Fig. 2 zeigt den Zustellerwagen der Fig. 1 von hinten.
Fig. 3 zeigt einzelne Komponenten des Antriebsstranges des Zustellerwagens in einer teilweisen Explosionsansicht.
Fig. 4 zeigt die einzelnen Komponenten des Antriebsstranges des Zustellerwagens aus Fig. 3 in einer ausführlicheren Explosionsansicht.
Fig. 5A bis Fig. 5C zeigt verschiedene Positionen von Komponenten des Zustellerwagens während des Kopplungsvorganges.
Fig. 6 zeigt eine Komponente aus Fig. 4 und Fig. 5A-C in Detailansicht.
Fig. 7A bis Fig. 9B zeigen die Funktionsweise der Differenzialsperre des Zustellerwagens anhand einiger Komponenten.

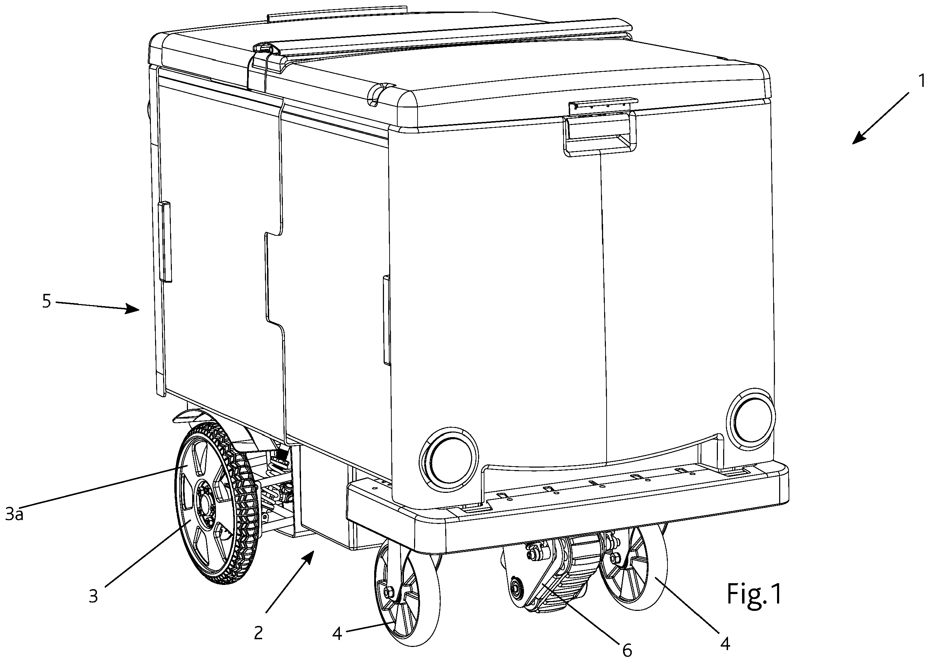

Figur 1 zeigt einen Zustellerwagen 1, welcher als Post-Zustellerwagen zum Transport von Poststücken wie Pakete und Briefe ausgeführt ist. Der Zustellerwagen 1 weist ein Fahrgestell 2 auf, an welchem zumindest zwei Antriebsräder 3, angeordnet sind. In der gezeigten Ausführung sind als Antriebsräder 3 zwei Hinterräder 3a vorgesehen. Weiters sind zwei lenkbare Vorderräder 4 am Fahrgestell 2 angeordnet. Von dem Fahrgestell 2 wird ein Aufbau 5 getragen, welcher der Aufnahme von Poststücken wie Paketen oder Briefen dient. In der in Figur 1 gezeigten Ausführung weist der Zustellerwagen 1 eine Einrichtung, hier einen Raupenantrieb 6, zum Überwinden von Fahrbahnabsätzen auf.

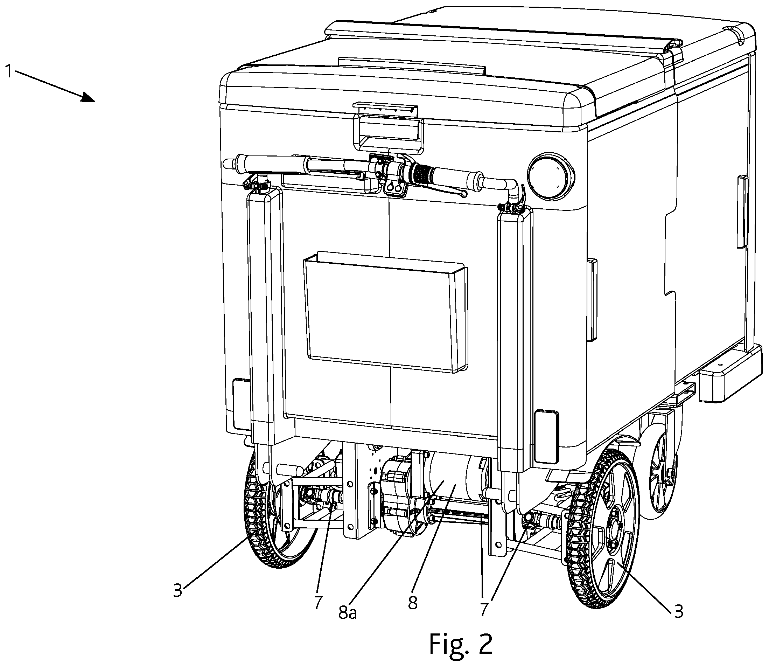

Figur 2 zeigt den Zustellerwagen 1 aus einer anderen Perspektive. Die Antriebsräder 3 sind über Antriebsachsen 7 mit einem gemeinsamen Antriebsmotor 8 verbunden. In der gezeigten Ausführung ist der Antriebsmotor 8 ein Elektromotor 8a, insbesondere ein Transaxle-Motor. Eine Abschirmung, welche den Antriebsmotor und die Antriebsachsen abschirmt, ist zugunsten der Übersichtlichkeit nicht dargestellt. Der Elektromotor 8a weist ein Differential auf, mit welchem Drehzahlunterschiede zwischen den Antriebsrädern 3 ausgeglichen werden können.

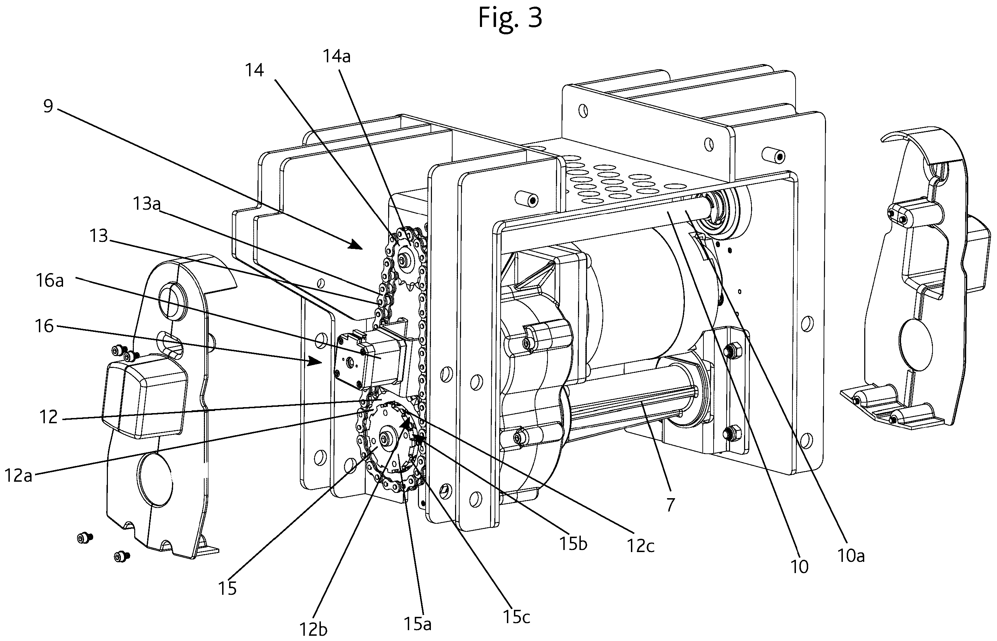

Wie aus Fig. 3 bis Fig. 4 ersichtlich, ist in der gezeigten Ausführung eine Differenzialsperre 9 vorgesehen, mit welcher das Differenzial für die Antriebsräder 3a selektiv gesperrt werden kann. Die Differenzialsperre 9 weist ein Brückenelement 10 auf, welches in der gezeigten Ausführung eine Brückenwelle 10a ist. Mithilfe des Brückenelements 10 können die Drehungen der Antriebsachsen 7 der Antriebsräder 3a miteinander gekoppelt werden. Das Brückenelement 10 befindet sich dabei oberhalb der Antriebsachsen 7 der Antriebsräder 3a. Die Antriebsachsen 7 der Antriebsräder 3 sind jeweils über Kupplungseinheiten 11 mit dem Brückenelement 10 koppelbar. In eingekoppelten Zuständen der Kupplungseinheiten 11 sind die Antriebsachsen 7 der Antriebsräder 3 über das Brückenelement 10 miteinander gekoppelt. In ausgekoppelten Zuständen der Kupplungseinheiten 11 sind die Antriebsachsen 7 der Antriebsräder 3 voneinander entkoppelt. Die Kupplungseinheiten 11 weisen erste Kupplungselemente 12 auf, welche über Kraftübertragungselemente 13, vorzugsweise über Endloselemente, in der gezeigten Ausführung über Ketten 13a, mit zweiten Kupplungselementen 14 der Kupplungseinheiten 11 verbunden sind. Die zweiten Kupplungselemente 14 sind drehfest, d.h. mitrotierend, mit dem Brückenelement 10 verbunden. Die zweiten Kupplungselemente 14 sind vorzugsweise als Kettenzahnräder 14a ausgeführt. Die Antriebsachsen 7 sind an ihren Enden drehfest mit Kopplungselementen 15 verbunden, welche in der gezeigten Ausführung als Zahnräder 15a ausgeführt sind. In den eingekoppelten Zuständen dienen die Kopplungselemente 15 zur Kraftübertragung auf die ersten Kupplungselemente 12 der Kupplungseinheiten 11. Die ersten Kupplungselemente 12 sind in der gezeigten Ausführung als Zahnkränze 12a ausgeführt. Zur Kraftübertragung von dem Kopplungselement 15 auf das erste Kupplungselement 12 im eingekoppelten Zustand ist in der gezeigten Ausführung eine Zahnverbindung vorgesehen. Die Zahnverbindung besteht aus einer ersten Verzahnung 12b der ersten Kupplungselemente 12 und einer zweiten Verzahnung 15b der Kopplungselemente 15. In der gezeigten Ausführung sind erste Zähne 12c der ersten Verzahnung 12b in Umfangsrichtung kürzer ausgeführt, als zweite Zähne 15c der zweiten Verzahnung 15b.

Weiters zeigt die Figur 3 eine Betätigungseinrichtung 16 zum Überführen eines der ersten Kupplungselemente 12 aus einem entkoppelten Zustand in einen gekoppelten Zustand. In der gezeigten Ausführung ist für jede Antriebsachse 7 eine eigene Betätigungseinrichtung 16 vorgesehen. Die Betätigungseinrichtungen 16 weisen jeweils einen Motor, in der gezeigten Ausführung einen Schrittmotor 16a, auf.

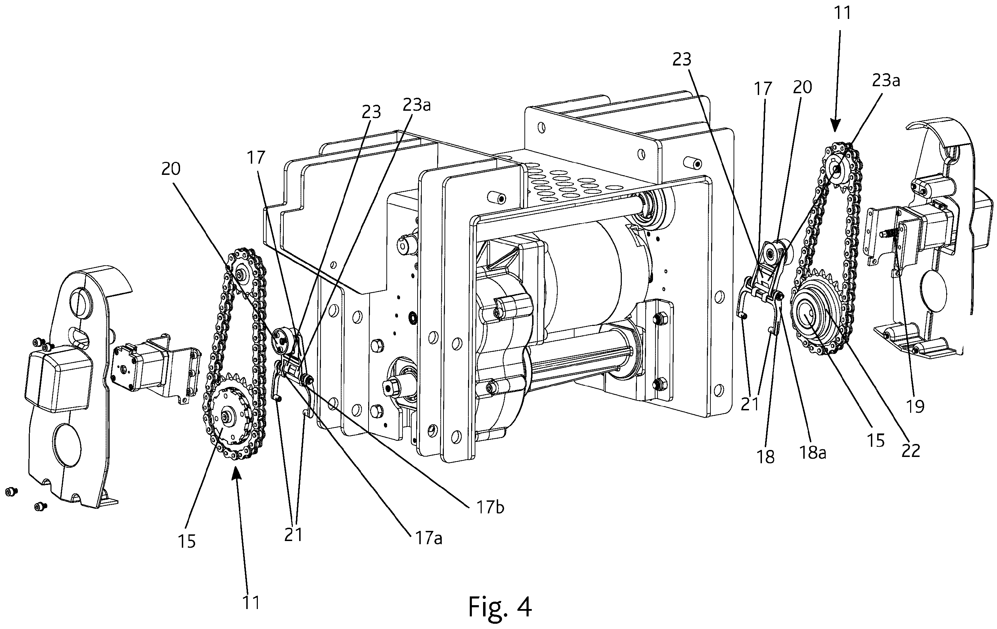

Wie insbesondere aus Fig. 4 ersichtlich, weist die Betätigungseinrichtung 16 ein mittels des Motors bewegliches Betätigungsteil 17 und ein mit dem ersten Kupplungselement 12 verbundenes Verbindungsteil 18 auf. Das Betätigungsteil 17 und das Verbindungsteil 18 weisen bevorzugt eine gemeinsame Schwenkachse auf, um die sie verschwenkbar sind. Die Kraft des Motors zum Überführen des Kopplungselements 15 von einem entkoppelten Zustand in einen gekoppelten Zustand wird über eine Spindel 19 mit einer Hülse 20 auf das Betätigungsteil 17 aufgebracht.

In der gezeigten Ausführung sind die Verbindungsteile 18 als Gabeln 18a mit jeweils zwei Gabelschenkeln 18b ausgeführt. An den freien Enden der Gabelschenkel 18b sind Führungszapfen 21 vorgesehen. Die Kopplungselemente 12 weisen Aufnahmenuten 22 auf, in welche die Führungszapfen 21 eingreifen, um die Kraft zum Einkoppeln oder Auskoppeln zu übertragen. Um die Kraft von dem Betätigungsteil 17 auf das Verbindungsteil 18 zu übertragen, weist die Betätigungseinrichtung 16 ein Federelement 23 auf, welches das Verbindungsteil 18 im betätigten Zustand des Betätigungsteils 17 in Richtung des eingekoppelten Zustands des ersten Kupplungselements 12 mit dem Kopplungselement vorspannt. In der gezeigten Ausführung ist das Federelement 23 ein Federband 23a. Weiters weist das Betätigungsteil 17 Anschläge 17a, hier Anschlagsnasen 17b, auf. Das Verbindungsteil 18 ist an den Anschlägen 17a, insbesondere an den Anschlagsnasen 17b, des Betätigungsteils 17 angeschlagen. Dadurch kann die Betätigungseinrichtung 16 ohne Wirkung des Federelements 23 vom eingekoppelten in den ausgekoppelten Zustand bewegt werden.

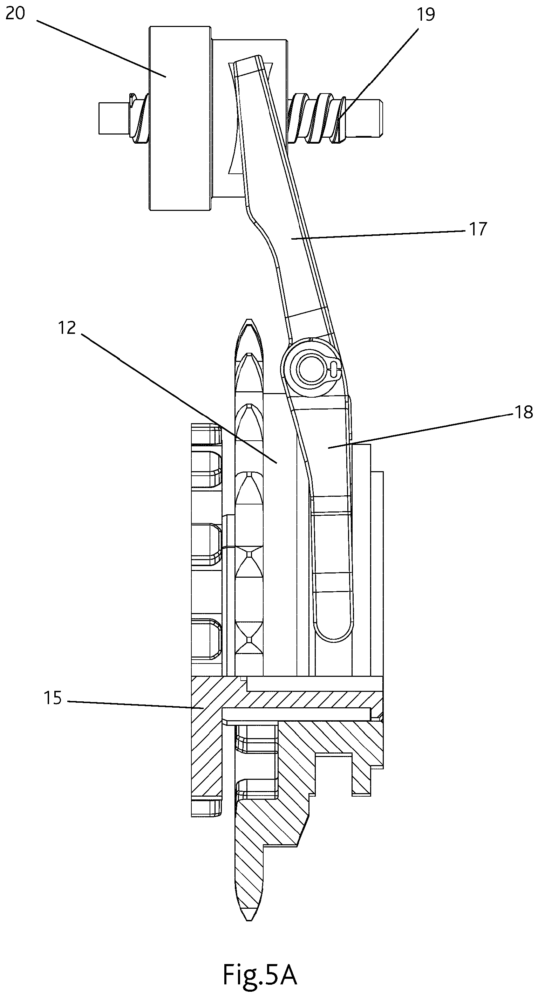

Die Aktivierung der Differenzialsperre wird anhand der Figuren 5A bis 9B geschildert.

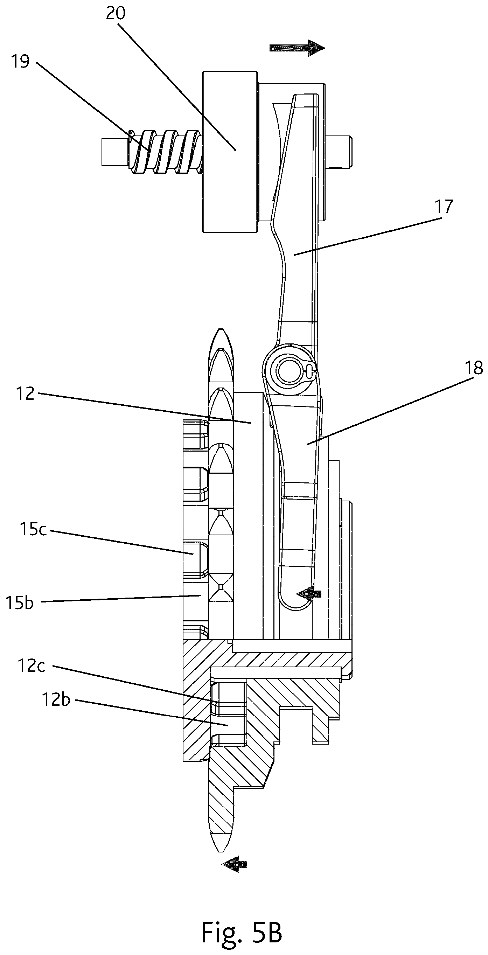

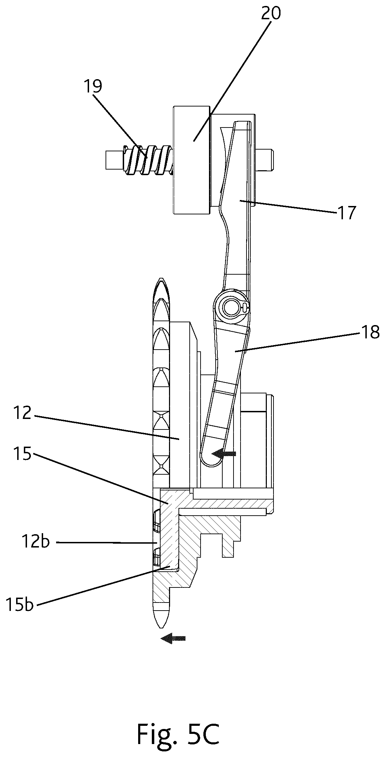

Figur 5A bis 5C zeigten mehrere Detailansichten, welche den Kraftfluss von den Betätigungseinrichtungen 16 auf die ersten Kupplungselemente 12 für die Überführung vom entkoppelten Zustand in den gekoppelten Zustand darstellen. In Fig. 5A ist der gekoppelte Zustand noch nicht eingeleitet. In Fig. 5B wird das Betätigungsteil 17 mittels Hülse 20 und Spindel 19 um die Schwenkachse ausgeschwenkt. Stehen die ersten Zähne 12c der ersten Verzahnung 12b des ersten Kupplungselementes 12 gegenüber der zweiten Zähne 15c der zweiten Verzahnung 15b des Kopplungselementes 15, wird das Federelement 23 (nicht dargestellt) gespannt. In Fig. 5C wird der gekoppelte Zustand dargestellt. Sobald ein Eingreifen der ersten Zähne 12c in die Zahnlücken der zweiten Verzahnung 15b und ein Eingreifen der zweiten Zähne 15c der zweiten Verzahnung 15b in die Zahnlücken der ersten Verzahnung 12b möglich ist, drückt das Federelement 23 (nicht dargestellt) das erste Kupplungselement 12 in den gekoppelten Zustand. Um das Eingreifen zu erleichtern, sind die ersten Zähne 12c der ersten Verzahnung 12b in Umfangsrichtung kürzer als die Lücken der zweiten Verzahnung 15b. Dadurch wird eine räumliche und zeitliche Toleranz beim Einkoppeln ermöglicht.

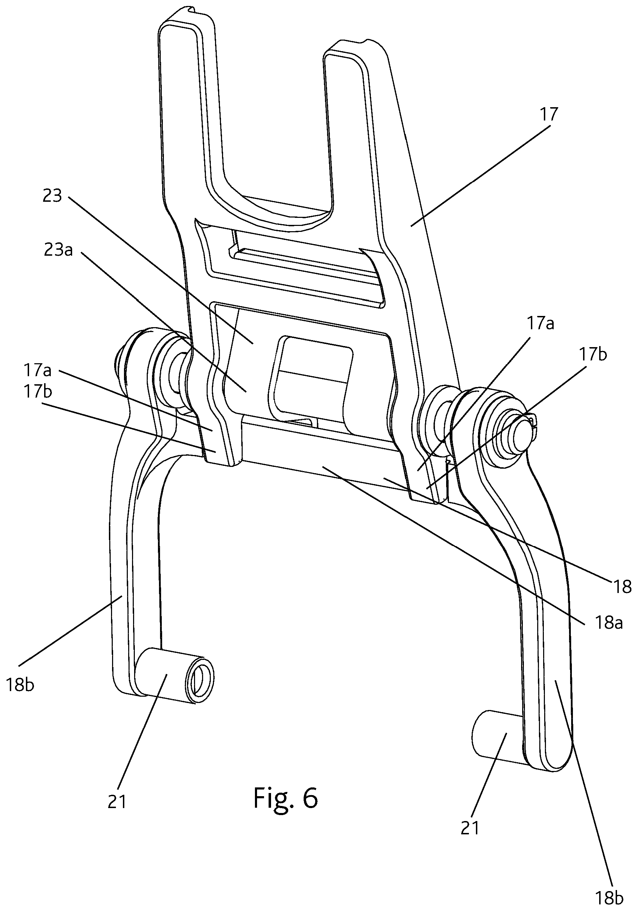

Figur 6 zeigt eine Ausführungsform des Betätigungsteils 17 und des Verbindungsteils 18 der Betätigungseinrichtung 16. Wie zuvor geschildert, ist das Verbindungsteil als Gabel 18a mit zwei Gabelschenkeln 18b ausgeführt, welche an den freien Enden Führungszapfen 21 tragen. Das Federelement 23, hier das Federband 23a, überträgt die Kraft vom Betätigungsteil 17 auf die Gabel 18a. Beim Überführen von dem gekoppelten Zustand in den entkoppelten Zustand bleibt das Federelement 23 durch die Anschlagsnasen 17b unbelastet. Einerseits wird dadurch das Federelement 23 weniger belastet und andererseits kann eine abwechselnde Zug-/Druckbelastung an der Oberfläche des Federelements 23 verhindert werden, zugunsten der Lebensdauer des Federelements 23.

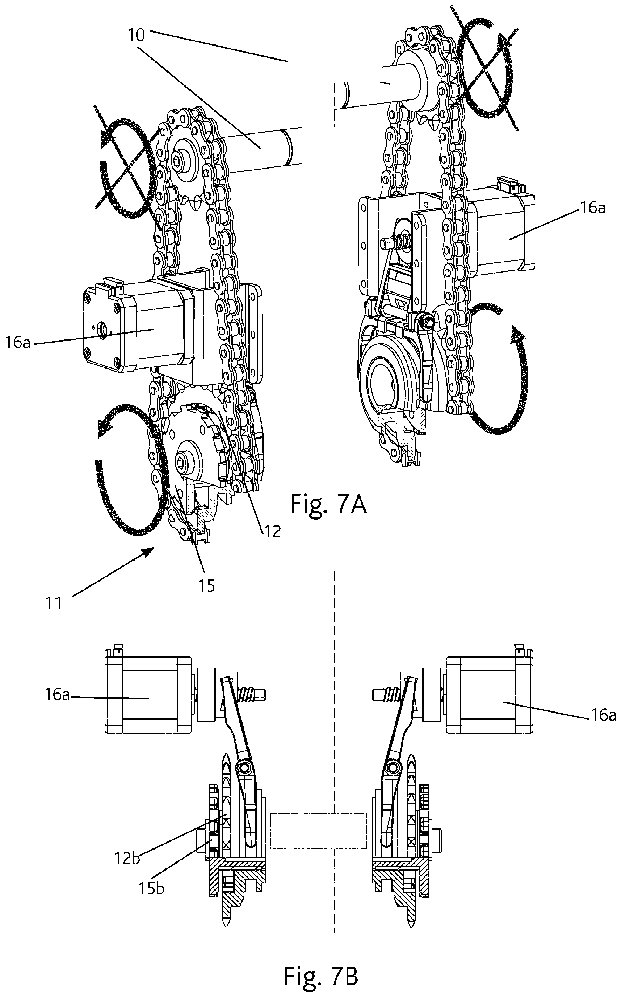

Wie aus Figur 7A und Figur 7B ersichtlich, haben die Schrittmotoren 16a den gekoppelten Zustand noch nicht eingeleitet und daher greifen die ersten Verzahnungen 12b nicht in die zweiten Verzahnungen 15b ein. Das Brückenelement 10 und die Kupplungseinheiten 11 verweilen gegenüber den Antriebsachsen 7 der Antriebsräder 3 in einem ruhenden Zustand. Dadurch kann ein signifikanter Anteil an Energie gespart werden, da kaum zusätzliche Teile unnötig mitbewegt werden müssen.

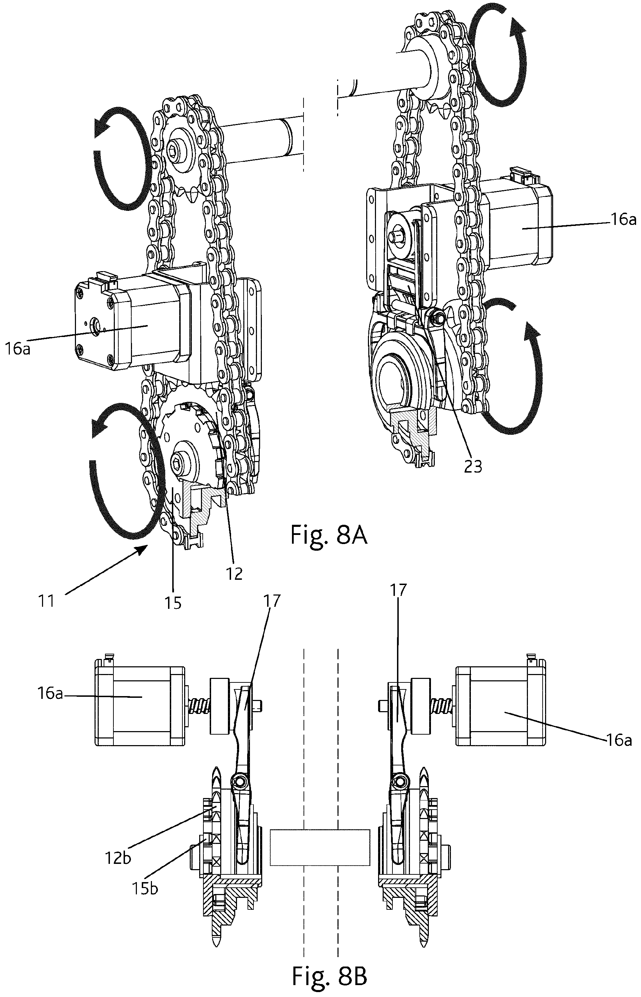

Figuren 8A und 8B zeigen die gleichen Komponenten wie die Figuren 7A und 7B, jedoch haben die Schrittmotoren 16a den Kopplungsvorgang eingeleitet. Die Differenzialsperre 9 ist jedoch noch nicht komplett aufrecht, da die ersten Verzahnungen 12b an den zweiten Verzahnungen 15b anstehen. Die Federelemente 23 der Betätigungsteile 17 sind, wie in der Frontansicht ersichtlich, vorgespannt.

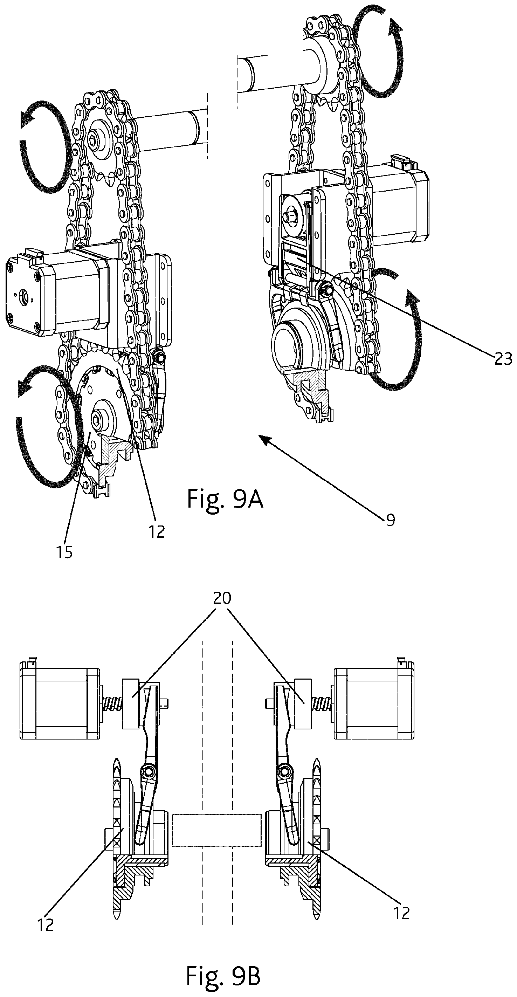

Figuren 9A und 9B zeigen die gleichen Komponenten wie die Figuren 7A, 7B und 8A, 8B, jedoch ist die Differenzialsperre 9 aufrecht. Die Antriebsachsen 7 haben die gleiche Drehzahl und übertragen das gleiche Drehmoment. Die Federelemente 23 sind entspannt und die Hülsen 20 verweilen an ihrer Position.

### Bezugsziffernliste:

| | | | |
|---|---|---|---|
| 1 | Zustellerwagen | 23 | Federelement |
| 2 | Fahrgestell | 23a | Federband |
| 3 | Antriebsräder | | |
| 3a | Hinterräder | | |
| 4 | Vorderräder | | |
| 5 | Aufbau | | |
| 6 | Raupenantrieb | | |
| 7 | Antriebsachsen | | |
| 8 | Antriebsmotor | | |
| 8a | Elektromotor | | |
| 9 | Differenzialsperre | | |
| 10 | Brückenelement | | |
| 10a | Brückenwelle | | |
| 11 | Kupplungseinheiten | | |
| 12 | erste Kupplungselemente | | |
| 12a | Zahnkränze | | |
| 12b | erste Verzahnung | | |
| 12c | ersten Zähne | | |
| 13 | Kraftübertragungselemente | | |
| 13a | Ketten | | |
| 14 | zweiten Kupplungselemente | | |
| 14a | Kettenzahnräder | | |
| 15 | Kopplungselemente | | |
| 15a | Zahnräder | | |
| 15b | zweite Verzahnung | | |
| 15c | zweiten Zähne | | |
| 16 | Betätigungseinrichtung | | |
| 16a | Schrittmotor | | |
| 17 | Betätigungsteil | | |
| 17a | Anschlägen | | |
| 17b | Anschlagsnasen | | |
| 18 | Verbindungsteil | | |
| 18a | Gabel | | |
| 18b | Gabelschenkel | | |
| 19 | Spindel | | |
| 20 | Hülse | | |
| 21 | Führungszapfen | | |
| 22 | Aufnahmenut | | |

## Patentansprüche

1. Zustellerwagen (1), insbesondere Post-Zustellerwagen, aufweisend:
ein Fahrgestell (2), an welchem zumindest zwei Antriebsräder (3), vorzugsweise zwei Hinterräder (3a), angeordnet sind,
einen Antriebsmotor (8) zum Antreiben von Antriebsachsen (7) der Antriebsräder (3),
ein Differenzial zum Ausgleich von Drehzahlunterschieden zwischen den Antriebsrädern (3),
einen vom Fahrgestell (2) getragenen Aufbau (5) zur Aufnahme von Transportgut, insbesondere von Poststücken,
eine Differenzialsperre (9) zur Sperrung des Differenzials für die Antriebsräder (3), so dass bei aktivierter Differenzialsperre (9) ein gleichzeitiges Antreiben der Antriebsräder (3) bei gleichem Drehmoment beim Überwinden eines Fahrbahnabsatzes ermöglicht wird,
wobei die Differenzialsperre (9) ein Brückenelement (10), insbesondere eine Brückenwelle (10a), zur Kopplung der Antriebsachsen (7) der Antriebsräder (3) aufweist,
wobei das Brückenelement (10) oberhalb der Antriebsachsen (7) der Antriebsräder (3) angeordnet ist,
**dadurch gekennzeichnet, dass**
die Antriebsachsen (7) der Antriebsräder (3) jeweils über eine Kupplungseinheit (11) mit dem Brückenelement (10) koppelbar sind, wobei die Antriebsachsen (7) der Antriebsräder (3) in eingekoppelten Zuständen der Kupplungseinheiten (11) über das Brückenelement (10) miteinander gekoppelt und in ausgekoppelten Zuständen der Kupplungseinheiten (11) voneinander entkoppelt sind.

2. Zustellerwagen (1) nach Anspruch 1, **dadurch gekennzeichnet, dass** in den ausgekoppelten Zuständen der Kupplungseinheiten (11) das Brückenelement (10), vorzugsweise zudem die Kupplungseinheiten (11), gegenüber den Drehungen der Antriebsachsen (7) der Antriebsräder (3) stillstehend angeordnet ist.

3. Zustellerwagen (1) nach Anspruch 1 und 2, **dadurch gekennzeichnet, dass** die Kupplungseinheiten (11) erste Kupplungselemente (12), welche in den eingekoppelten Zuständen mit den Antriebsachsen (7) gekoppelt sind, und zweite Kupplungselemente (14), welche jeweils mit dem Brückenelement (10) gekoppelt sind, aufweist, wobei die ersten Kupplungselemente (12) über Kraftübertragungselemente (13), vorzugsweise über Endloselemente, insbesondere über Ketten (13a), mit den zweiten Kupplungselementen (14) verbunden sind.

4. Zustellerwagen (1) nach Anspruch 3, **dadurch gekennzeichnet, dass** mit den Antriebsachsen (7) gekoppelte Kopplungselemente (15) in den eingekoppelten Zuständen mit den ersten Kupplungselementen (12) der Kupplungseinheiten (11) gekoppelt sind.

5. Zustellerwagen (1) nach Anspruch 4, **dadurch gekennzeichnet, dass** die ersten Kupplungselemente (12) jeweils eine erste Verzahnung (12b) aufweisen und die Kopplungselemente (15) jeweils eine zweite Verzahnung (15b) aufweisen, wobei die zweiten Verzahnungen (15b) der Kopplungselemente (15) in den eingekoppelten Zuständen mit den ersten Verzahnungen (12b) der ersten Kupplungselemente (12) in Eingriff stehen.

6. Zustellerwagen (1) nach Anspruch 5, **dadurch gekennzeichnet, dass** erste Zähne (12c) der ersten Verzahnung (12b) in Umfangsrichtung kürzer als Lücken zwischen zweiten Zähnen (15c) der zweiten Verzahnung (15b) sind.

7. Zustellerwagen (1) nach einem der Ansprüche 3 bis 6, **dadurch gekennzeichnet, dass** eine Betätigungseinrichtung (16) zum Bewegen eines der ersten Kupplungselemente (12) vom ausgekoppelten in den eingekoppelten Zustand vorgesehen ist, wobei die Betätigungseinrichtung (16) bevorzugt einen Motor, insbesondere einen Schrittmotor (16a), aufweist.

8. Zustellerwagen (1) nach Anspruch 7, **dadurch gekennzeichnet, dass** die Betätigungseinrichtung (16) ein mittels des Motors bewegliches Betätigungsteil (17) und ein mit dem ersten Kupplungselement (12) verbundenes Verbindungsteil (18) aufweist.

9. Zustellerwagen (1) nach Anspruch 7 oder 8, **dadurch gekennzeichnet, dass** das Betätigungsteil (17) und das Verbindungsteil (18) um eine gemeinsame Schwenkachse verschwenkbar sind.

10. Zustellerwagen (1) nach Anspruch 8 und/oder 9, **dadurch gekennzeichnet, dass** das Verbindungsteil (18) eine Gabel (18a) mit zwei Gabelschenkeln (18b) aufweist, wobei an den freien Enden der Gabelschenkel (18b) bevorzugt Führungszapfen (21) vorgesehen sind, welche in einer Aufnahmenut (22) des ersten Kupplungselements (12) angeordnet sind.

11. Zustellerwagen (1) nach einem der Ansprüche 7 bis 10, **dadurch gekennzeichnet, dass** die Betätigungseinrichtung (16) ein Federelement (23) aufweist, welche das Verbindungsteil (18) im betätigten Zustand des Betätigungsteils (17) in Richtung des eingekoppelten Zustands des ersten Kupplungselements (12) mit dem Kopplungselement (15) vorspannt, wobei als Federelement (23) bevorzugt ein Federband (23a) vorgesehen ist.

12. Zustellerwagen (1) nach einem der Ansprüche 8 bis 11, **dadurch gekennzeichnet, dass** das Verbindungsteil (18) im unbelasteten Zustand des Verbindungsteils (18) an einem Anschlag (17a), insbesondere an einer Anschlagnase (17b), des Betätigungsteils (17) angeschlagen ist, wobei die Betätigungseinrichtung (16) ohne Wirkung des Federelements (23) vom eingekoppelten in den ausgekoppelten Zustand beweglich ist.

## Claims

1. Delivery cart (1), in particular a mail delivery cart, comprising:
a chassis (2), on which at least two drive wheels (3), preferably two rear wheels (3a), are arranged,
a drive motor (8) for driving drive axles (7) of the drive wheels (3),
a differential for compensating rotational speed differences between the drive wheels (3),
a body (5) carried by the chassis (2) for receiving transport goods, in particular mail items,
a differential lock (9) for locking the differential for the drive wheels (3), such that, when the differential lock (9) is activated, simultaneous driving of the drive wheels (3) with the same torque when overcoming a road edge is enabled,
wherein the differential lock (9) comprises a bridge element (10), in particular a bridge shaft (10a), for coupling the drive axles (7) of the drive wheels (3),
wherein the bridge element (10) is arranged above the drive axles (7) of the drive wheels (3),
**characterized in that**
the drive axles (7) of the drive wheels (3) are each couple-able with the bridge element (10) via a coupling unit (11), wherein, in coupled states of the coupling units (11), the drive axles (7) of the drive wheels (3) are coupled with one another via the bridge element (10), and in uncoupled states of the coupling units (11) are decoupled from one another.

2. Delivery cart (1) according to Claim 1, **characterized in that**, in the uncoupled states of the coupling units (11), the bridge element (10), preferably additionally the coupling units (11), is arranged stationary with respect to the rotations of the drive axles (7) of the drive wheels (3).

3. Delivery cart (1) according to Claims 1 and 2, **characterized in that** the coupling units (11) comprise first coupling elements (12), which in the coupled states are coupled with the drive axles (7), and second coupling elements (14), which are each coupled with the bridge element (10), wherein the first coupling elements (12) are connected with the second coupling elements (14) via force-transmitting elements (13), preferably via endless elements, in particular via chains (13a).

4. Delivery cart (1) according to Claim 3, **characterized in that** coupling elements (15) coupled with the drive axles (7) are, in the coupled states, coupled with the first coupling elements (12) of the coupling units (11).

5. Delivery cart (1) according to Claim 4, **characterized in that** the first coupling elements (12) each comprise a first toothing (12b) and the coupling elements (15) each comprise a second toothing (15b), wherein the second toothings (15b) of the coupling elements (15) engage with the first toothings (12b) of the first coupling elements (12) in the coupled states.

6. Delivery cart (1) according to Claim 5, **characterized in that** first teeth (12c) of the first toothing (12b) are shorter in the circumferential direction than gaps between second teeth (15c) of the second toothing (15b).

7. Delivery cart (1) according to any of Claims 3 to 6, **characterized in that** an actuating device (16) is provided for moving one of the first coupling elements (12) from the uncoupled into the coupled state, wherein the actuating device (16) preferably comprises a motor, in particular a stepping motor (16a).

8. Delivery cart (1) according to Claim 7, **characterized in that** the actuating device (16) comprises an actuating part (17) movable by means of the motor and a connecting part (18) connected with the first coupling element (12).

9. Delivery cart (1) according to Claim 7 or 8, **characterized in that** the actuating part (17) and the connecting part (18) are pivotable about a common pivot axis.

10. Delivery cart (1) according to Claims 8 and/or 9, **characterized in that** the connecting part (18) comprises a fork (18a) with two fork arms (18b), wherein at the free ends of the fork arms (18b) guiding pins (21) are preferably provided, which are arranged in a receiving groove (22) of the first coupling element (12).

11. Delivery cart (1) according to any of Claims 7 to 10, **characterized in that** the actuating device (16) comprises a spring element (23), which biases the connecting part (18), in the actuated state of the actuating part (17), in the direction of the coupled state of the first coupling element (12) with the coupling element (15), wherein as spring element (23) preferably a spring band (23a) is provided.

12. Delivery cart (1) according to any of Claims 8 to 11, **characterized in that** the connecting part (18), in the unloaded state of the connecting part (18), abuts against a stop (17a), in particular against a stop lug (17b), of the actuating part (17), wherein the actuating device (16) is movable from the coupled into the uncoupled state without action of the spring element (23).

## Revendications

1. Chariot de livraison (1), en particulier chariot de livraison postal, comprenant:
un châssis (2) sur lequel sont disposées au moins deux roues motrices (3), de préférence deux roues arrière (3a),
un moteur d'entraînement (8) pour entraîner des essieux moteurs (7) des roues motrices (3),
un différentiel pour compenser les différences de vitesse de rotation entre les roues motrices (3),
une structure (5) supportée par le châssis (2) pour recevoir des marchandises à transporter, en particulier des envois postaux,
un blocage de différentiel (9) pour bloquer le différentiel des roues motrices (3), de sorte que lorsque le blocage de différentiel (9) est activé, un entraînement simultané des roues motrices (3) avec un couple identique est possible lors du franchissement d'une dénivellation de chaussée,
le blocage de différentiel (9) comprenant un élément de pont (10), en particulier un arbre de pont (10a), pour coupler les essieux moteurs (7) des roues motrices (3),
l'élément de pont (10) étant disposé au-dessus des essieux moteurs (7) des roues motrices (3),
**caractérisé en ce que**
les essieux moteurs (7) des roues motrices (3) peuvent être couplés chacun à l'élément de pont (10) par l'intermédiaire d'une unité d'embrayage (11), les essieux moteurs (7) des roues motrices (3) étant couplés entre eux par l'élément de pont (10) dans les états embrayés des unités d'embrayage (11) et étant découplés l'un de l'autre dans les états débrayés des unités d'embrayage (11).

2. Chariot de livraison (1) selon la revendication 1, **caractérisé en ce que** dans les états débrayés des unités d'embrayage (11), l'élément de pont (10), de préférence également les unités d'embrayage (11), est disposé de manière stationnaire par rapport aux rotations des essieux moteurs (7) des roues motrices (3).

3. Chariot de livraison (1) selon les revendications 1 et 2, **caractérisé en ce que** les unités d'embrayage (11) comprennent des premiers éléments d'embrayage (12), qui sont couplés aux essieux moteurs (7) dans les états embrayés, et des seconds éléments d'embrayage (14), qui sont chacun couplés à l'élément de pont (10), les premiers éléments d'embrayage (12) étant reliés aux seconds éléments d'embrayage (14) par des éléments de transmission de force (13), de préférence par des éléments sans fin, en particulier par des chaînes (13a).

4. Chariot de livraison (1) selon la revendication 3, **caractérisé en ce que** des éléments de couplage (15) couplés aux essieux moteurs (7) sont couplés aux premiers éléments d'embrayage (12) des unités d'embrayage (11) dans les états embrayés.

5. Chariot de livraison (1) selon la revendication 4, **caractérisé en ce que** les premiers éléments d'embrayage (12) comprennent chacun une première denture (12b) et les éléments de couplage (15) comprennent chacun une seconde denture (15b), les secondes dentures (15b) des éléments de couplage (15) étant en prise avec les premières dentures (12b) des premiers éléments d'embrayage (12) dans les états embrayés.

6. Chariot de livraison (1) selon la revendication 5, **caractérisé en ce que** les premières dents (12c) de la première denture (12b) sont plus courtes dans la direction circonférentielle que les espaces entre les secondes dents (15c) de la seconde denture (15b).

7. Chariot de livraison (1) selon l'une des revendications 3 à 6, **caractérisé en ce qu'**un dispositif d'actionnement (16) est prévu pour déplacer l'un des premiers éléments d'embrayage (12) de l'état débrayé à l'état embrayé, le dispositif d'actionnement (16) comprenant de préférence un moteur, en particulier un moteur pas à pas (16a).

8. Chariot de livraison (1) selon la revendication 7, **caractérisé en ce que** le dispositif d'actionnement (16) comprend une pièce d'actionnement (17) entraînée par le moteur et une pièce de liaison (18) reliée au premier élément d'embrayage (12).

9. Chariot de livraison (1) selon la revendication 7 ou 8, **caractérisé en ce que** la pièce d'actionnement (17) et la pièce de liaison (18) peuvent pivoter autour d'un axe de pivotement commun.

10. Chariot de livraison (1) selon la revendication 8 et/ou 9, **caractérisé en ce que** la pièce de liaison (18) comprend une fourche (18a) avec deux branches de fourche (18b), des goupilles de guidage (21) étant de préférence prévues aux extrémités libres des branches de fourche (18b), lesquelles sont disposées dans une rainure de réception (22) du premier élément d'embrayage (12).

11. Chariot de livraison (1) selon l'une des revendications 7 à 10, **caractérisé en ce que** le dispositif d'actionnement (16) comprend un élément ressort (23) qui précontraint la pièce de liaison (18) dans la direction de l'état embrayé du premier élément d'embrayage (12) avec l'élément de couplage (15) lorsque la pièce d'actionnement (17) est dans l'état actionné, un ruban ressort (23a) étant de préférence prévu comme élément ressort (23).

12. Chariot de livraison (1) selon l'une des revendications 8 à 11, **caractérisé en ce que** la pièce de liaison (18) dans l'état non chargé de la pièce de liaison (18) est en butée contre une butée (17a), en particulier contre un ergot de butée (17b), de la pièce d'actionnement (17), le dispositif d'actionnement (16) pouvant être déplacé de l'état embrayé à l'état débrayé sans l'effet de l'élément ressort (23).
